# EUROPEAN PATENT APPLICATION

(11) **EP 4 101 683 A1**
(43) Date of publication of application: **14.12.2022**
(21) Application number: 22178209.7
(22) Date of filing: 09.06.2022
(51) Int. Cl.: B60L 50/61, B60L 53/51

(54) **POWER SYSTEM FOR SUPPLYING ELECTRICAL ENERGY TO A REFRIGERATOR OF A REFRIGERATED VEHICLE AND ASSOCIATED CONTROL SYSTEM AND METHOD**

(30) Priority: 09.06.2021 GB 202108248
(71) Applicant: Renewable Innovations and Solutions Limited, Alfreton DE55 6EH (GB)
(72) Inventor: Cropper, Paul, Alfreton, DE55 6EH (GB)
(74) Representative: Swindell & Pearson Limited

(57) **Abstract**

According to various, but not necessarily all, embodiments there is provided a power system for supplying electrical energy to a refrigerator of a refrigerated vehicle. The power system comprises at least one energy storage device, at least one solar panel, and at least one processor, and memory storing computer program instructions. The at least one energy storage device is for electrical connection to an electrical generator of the refrigerated vehicle and is for supplying electrical energy to the refrigerator. The at least one solar panel is for providing electrical energy to the at least one energy storage device. The computer program instructions, when executed by the at least one processor, cause the power system to: in response to reception of a signal that is indicative of a current energy consumption rate of the refrigerated vehicle being below a threshold, cause the at least one energy storage device to receive electrical energy from the electrical generator of the refrigerated vehicle.

## Description

### TECHNOLOGICAL FIELD

Embodiments of the present disclosure relate to a power system for supplying electrical energy to a refrigerator of a refrigerated vehicle. Some relate to a power system for supplying electrical energy to a refrigerator of a refrigerated lorry used in a cold chain for transporting refrigerated food.

### BACKGROUND

A cold chain is a temperature-controlled supply chain. It is used to extend and ensure the shelf life of perishable goods such as food. Refrigerated vehicles are used to carry perishable goods at low temperatures and are a key part of a cold chain. Refrigerated vehicles contain refrigerators to keeps the goods at low temperatures. Traditionally the refrigerator is powered by a diesel engine which is separate to the main vehicle engine. These diesel engines add weight to the vehicle and cause significant pollution.

### BRIEF SUMMARY

According to various, but not necessarily all, embodiments there is provided a power system for supplying electrical energy to a refrigerator of a refrigerated vehicle. The power system comprises at least one energy storage device, at least one solar panel, and at least one processor, and memory storing computer program instructions. The at least one energy storage device is for electrical connection to an electrical generator of the refrigerated vehicle and is for supplying electrical energy to the refrigerator. The at least one solar panel is for providing electrical energy to the at least one energy storage device. The computer program instructions, when executed by the at least one processor, cause the power system to: in response to reception of a signal that is indicative of a current energy consumption rate of the refrigerated vehicle being below a threshold, cause the at least one energy storage device to receive electrical energy from the electrical generator of the refrigerated vehicle.

The computer program instructions may further cause the power system to: cause the at least one energy storage device to cease receiving electrical energy from the electrical generator of the refrigerated vehicle in response to the signal being indicative that the current energy consumption rate of the refrigerated vehicle is below a further threshold. The further threshold may be the same as the threshold. The further threshold may be lower than the threshold.

The computer program instructions may further cause the power system to: in response to reception of a signal indicative of an energy level of the at least one energy storage device, change the threshold based on the energy level of the at least one energy storage device. The computer program instructions may further cause the power system to: decrease the threshold in response to the energy level of the at least one energy storage device being below a threshold.

The computer program instructions may further cause the power system to: cause the at least one energy storage device to cease receiving electrical energy from the electrical generator of the refrigerated vehicle when the at least one energy storage device is full.

The computer program instructions may further cause the power system to: in response to reception of a signal indicative of a charge level of an engine battery of the refrigerated vehicle, change the threshold based on the charge level of the engine battery of the refrigerated vehicle. The computer program instructions may further cause the power system to: increase the threshold in response to the charge level of the engine battery of the refrigerated vehicle being below a threshold.

The at least one energy storage device may comprise at least one battery. The at least one solar panel may comprise a prismatic surface comprising a plurality of prisms. The signal may be received from an engine controller which is coupled to an engine of the refrigerated vehicle.

The energy consumption rate may be a fuel consumption rate. The energy consumption rate may be a measure of the energy used for the refrigerated vehicle to travel a specific distance. The signal that is indicative of a current energy consumption rate of the refrigerated vehicle may comprise information indicative of the accelerator pedal position. The signal that is indicative of a current energy consumption rate of the refrigerated vehicle may be indicative that an engine of the refrigerated vehicle is in an overrun condition. The computer program instructions may further cause the power system to: cause the at least one energy storage device to receive electrical energy from the electrical generator of the refrigerated vehicle in response to the signal being indicative that the engine of the refrigerated vehicle is in an overrun condition.

The electrical generator may be an alternator or an electric motor/generator, and the electrical generator may be coupled to an engine of the refrigerated vehicle. The energy consumption rate being below the threshold may indicate that the refrigerated vehicle is braking or travelling downhill. The power system may further comprise the refrigerator. The refrigerator may have capacity of 1000 litres or more. A refrigerated vehicle may comprise the power system. The at least one solar panel may be positioned on a roof of the refrigerated vehicle. The refrigerated vehicle may be a land-based vehicle.

According to various, but not necessarily all, embodiments there is provided a control system for supplying electrical energy to a refrigerator of a refrigerated vehicle. The control system comprises: at least one processor, and memory storing computer program instructions. The computer program instructions, when executed by the at least one processor, cause the control system to: in response to reception of a signal that is indicative of a current energy consumption rate of the refrigerated vehicle being below a threshold, cause at least one energy storage device to receive electrical energy from an electrical generator of the refrigerated vehicle.

According to various, but not necessarily all, embodiments there is provided a method for supplying electrical energy to a refrigerator of a refrigerated vehicle, the method comprises: in response to reception of a signal that is indicative of a current energy consumption rate of the refrigerated vehicle being below a threshold, cause at least one energy storage device to receive electrical energy from an electrical generator of the refrigerated vehicle.

According to various, but not necessarily all, embodiments there is provided a power system for supplying electrical energy to an electrical device of a vehicle. The power system comprises at least one energy storage device, at least one solar panel, at least one processor and memory storing computer program instructions. The at least one energy storage device is for electrical connection to an electrical generator of the vehicle and for supplying electrical energy to the electrical device. The at least one solar panel is for providing electrical energy to the at least one energy storage device. The computer program instructions, when executed by the at least one processor, cause the power system to: in response to reception of a signal that is indicative of a current energy consumption rate of the vehicle being below a threshold, cause the at least one energy storage device to receive electrical energy from the electrical generator of the vehicle.

The electrical device may be a refrigerator, a crane, a cement mixer, lighting, air conditioning, a forklift, a tail-lift, a moving floor, a fan, or medical equipment.

According to various, but not necessarily all, embodiments there is provided examples as claimed in the appended claims.

### BRIEF DESCRIPTION

Some examples will now be described with reference to the accompanying drawings in which:
FIG. 1 illustrates a perspective view of an example refrigerated vehicle;
FIG. 2 illustrates a perspective view of an example solar panel;
FIG. 3 illustrates a schematic block diagram of an example refrigerator;
FIG. 4 illustrates a schematic block diagram of an example refrigerated vehicle;
FIG. 5 illustrates a schematic block diagram of an example refrigerated vehicle; and
FIG. 6 illustrates a flow chart of an example method.

### DETAILED DESCRIPTION

Embodiments of the invention relate to a power system for supplying electrical energy to a refrigerator of a refrigerated vehicle. An energy storage device of the power system, such as a battery, supplies electrical energy to the refrigerator. Energy is supplied to the battery by a solar panel and an electrical generator of the refrigerated vehicle, such as alternator that is coupled to the engine of the vehicle. In some embodiments, energy is only supplied to the battery by the alternator when the load on the engine is relatively low, such as when the vehicle is braking or going downhill, in order to minimise the effect on the vehicle's motion.

Embodiments of the invention advantageously obviate the need for a separate diesel generator to power the refrigerator, as in traditional refrigerated vehicles. This has significant environmental benefits as the pollution emitted by the vehicle is substantially reduced due to the absence of the diesel generator and the reduced weight of the vehicle. This reduced weight may also allow for the vehicle to carry a larger payload.

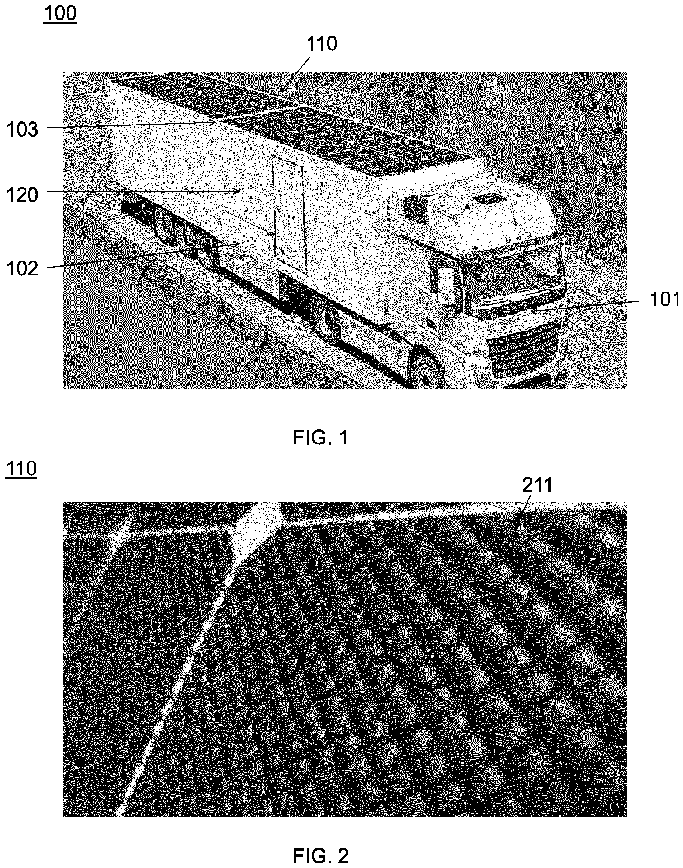

FIG. 1 illustrates a perspective view of an example refrigerated vehicle 100 according to embodiments of the invention. In this example the vehicle 100 is a land-based vehicle in the form of a refrigerated lorry and comprises a cab 101 and trailer 102. In other examples, the vehicle 100 may be a different type of road vehicle, such as a van or car. The vehicle 100 may, for example, be a 3.5 tonne van or a lorry with a 40 tonne trailer 102. In further examples, the vehicle 100 may be a different type of land-based vehicle such as a train.

The illustrated refrigerated vehicle 100 comprises an engine, a refrigerator comprising a refrigerated chamber 120, and a power system for supplying electrical energy to the refrigerator. The engine is configured to provide mechanical energy that causes the vehicle 100 to move.

The power system comprises a plurality of solar panels 110. The solar panels 110 are positioned on the roof 103 of the vehicle 100, on the roof 103 of the trailer 102. The refrigeration chamber 120 is positioned inside the trailer 102. In some embodiments the power system comprises the refrigerator.

FIG. 2 illustrates a perspective view of an example solar panel 110 according to embodiments of the invention. A solar panel 110 is also known as a photovoltaic (PV) module 110 and is for converting light energy to electrical energy. Multiple solar panels 110 form an array. In this example, the solar panel 110 comprises a prismatic surface comprising a plurality of prisms 211. The solar panel 110 also comprises a plurality of solar cells. The prisms 211 refract light from a variety of different angles so that that the light is directed towards the solar cells. This increases the light-absorbing properties of the solar panel 110 and allows them to work well when the sun is at lower angles in low light conditions.

Any form of solar panels 110 may be used. For example, the solar panels 110 may comprise crystalline silicon solar cells, made from either multicrystalline or monocrystalline silicon. Alternatively, the solar panels 110 may comprise thin film solar cells, which may be made from CdTe, or a-Si, or a-Si+uc-Si tandem, or CIGS, or the solar panels 110 may comprise perovskite solar cells. The solar panels 110 can be either substantially rigid or flexible so as conform to a curved vehicle roof 103.

In the illustrated example the solar panels 110 are positioned on the roof 103 of the vehicle 100; however, in other examples some or all of the solar panels 110 may be positioned on the sides of the vehicle 100. The solar panels 110 can be mounted so as to not breach the integrity of vehicle 100.

Solar panels 110 produce the most energy when the light from the Sun is strongest. This is also when the ambient temperature is highest and thus when the refrigerator needs to use the most energy to maintain its internal temperature. This correlation between the peak power produced by solar power and the peak in power used by the refrigerator is useful in supply of energy when needed.

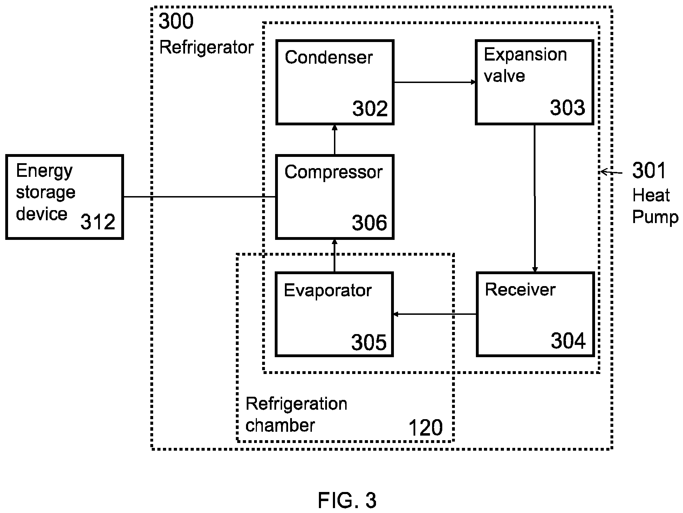

FIG. 3 illustrates a schematic block diagram of an example refrigerator 300 of the refrigerated vehicle 100 according to embodiments of the invention. Although an example refrigerator 300 is described below any form of refrigerator 300 may be used. A refrigerator 300 keeps an internal refrigeration chamber 120 cool by the use of thermally insulating walls and a heat pump 301, which transfers heat from inside the refrigerator 300 to the external environment. The heat pump 301 of the refrigerator 300 comprises a condenser 302, an expansion valve 303, a receiver 304, an evaporator 305 and a compressor 306. The evaporator 305 is positioned inside the refrigeration chamber 120, whilst the condenser 302, expansion valve 303, receiver 304 and compressor 306 are positioned outside the refrigeration chamber 120. The refrigerator 300 may have a capacity of 1000 litres or more.

In use, ambient air from outside is drawn over the evaporator 305 and exchanges heat with a refrigerant, such as ammonia. This causes the refrigerant to change state to a saturated vapour. The saturated vapour is compressed by the compressor 306 and exits the compressor 306 as a superheated vapour. The superheated vapour is condensed by the condenser 302 to a saturated liquid which removes the superheat by cooling the vapour. The saturated liquid passes through the expansion valve 303 undergoing an abrupt decrease in pressure resulting in an adiabatic flash evaporation and auto-refrigeration returning the refrigerant to its original state. The refrigerant is then stored in the receiver 304 before being sent to the evaporator 305 to repeat the cycle.

An energy storage device 312 supplies electrical energy to the refrigerator 300 in order to power the refrigerator 300. In use, the energy storage device 312 is electrically connected to the refrigerator 300, specifically the compressor 306. In some examples the energy storage device 312 may comprise at least one battery. The battery is a rechargeable electric battery and may be of any suitable type such as lithium-ion, lead-acid, nickel-cadmium, nickel-zinc or nickel metal hydride. The battery may be any suitable voltage such as 12V, 24V or 48V. The battery is not for traction of the vehicle 100 (i.e. it does not supply energy that is used for causing the vehicle 100 to move) nor does it supply energy for ignition of an engine of the vehicle 100. In some examples the energy storage device 312 may comprise a capacitor and/or a flywheel in addition to, or as an alternative to, one or more batteries.

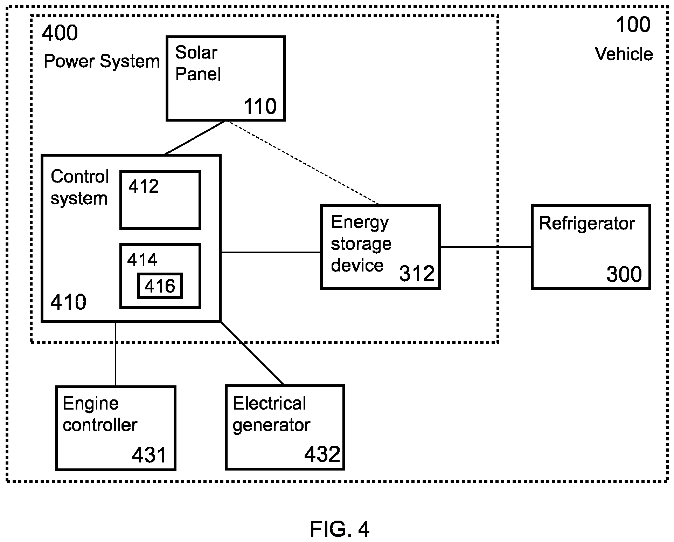

FIG. 4 illustrates a schematic block diagram of an example refrigerated vehicle 100 according to embodiments of the invention. The vehicle 100 comprises the refrigerator 300 as illustrated in FIG. 3, an electrical generator 432, an engine controller 431, and a power system 400 for supplying electrical energy to the refrigerator 300. In use, the power system 400 is electrically connected to the refrigerator 300 The power system 400 comprises an energy storage device 312, at least one solar panel 110 and a control system 410. The power system 400 may also comprise a further electrical generator.

The engine controller 431 is coupled to the engine of the vehicle 100. The engine controller 431 may also be known as an engine management system or engine control unit (ECU). The engine controller 431 monitors and controls various parameters of the vehicle 100. The engine controller 431 sends and receives signals from other devices associated with the engine, such as sensors, using a controller area network (CAN bus). The engine controller 431 can send and receive signals from the control system 410 of the power system 400.

The parameters that can be monitored by the engine controller 431 include vehicle speed, engine rpm, energy/fuel efficiency, engine torque and the accelerator pedal position. The accelerator pedal position is the actuation angle of the accelerator pedal of the vehicle 100; that is to say, an angle which indicates the extent to which the accelerator pedal has been actuated by the driver of the vehicle 100.

The electrical generator 432 is mechanically coupled to the engine of the vehicle 100. The electrical generator 432 may be driven by a belt coupled to the engine. The electrical generator 432 may be an alternator, an electric motor/generator (M/G) or a dynamo. The electrical generator 432 is for supplying electrical energy to the energy storage device 312 of the power system 400. In use, the electrical generator 432 and energy storage device 312 are electrically connected. The electrical energy may be directed by the control system 410 of the power system 400 from the electrical generator 432 to the energy storage device 312. For example, the control system 410 may actuate a switch to cause the energy storage device 312 to receive electrical energy from the electrical generator 432 of the vehicle 100.

The solar panel 110 and energy storage device 312 are as described previously with regard to FIGs 2 and 3. The solar panel 110 is for providing electrical energy to the energy storage device 312. In use, the solar panel 110 and energy storage device 312 are electrically connected. The electrical energy can be provided directly from the solar panel 110 to the energy storage device 312 or can be provided via the control system 410 of the power system 400. The control system 410 comprises at least one processor 412 and memory 414 storing computer program instructions 416. The control system 410 may also comprise a user interface which comprises a plurality of buttons. For example, the user interface may allow a user to turn the refrigerator 300 and/or power system 400 on. The user interface may allow a user to set a timer to turn the refrigerated and/or power system 400 on. This allows of the refrigerated 300 to be pre-chilled before a user starts their day.

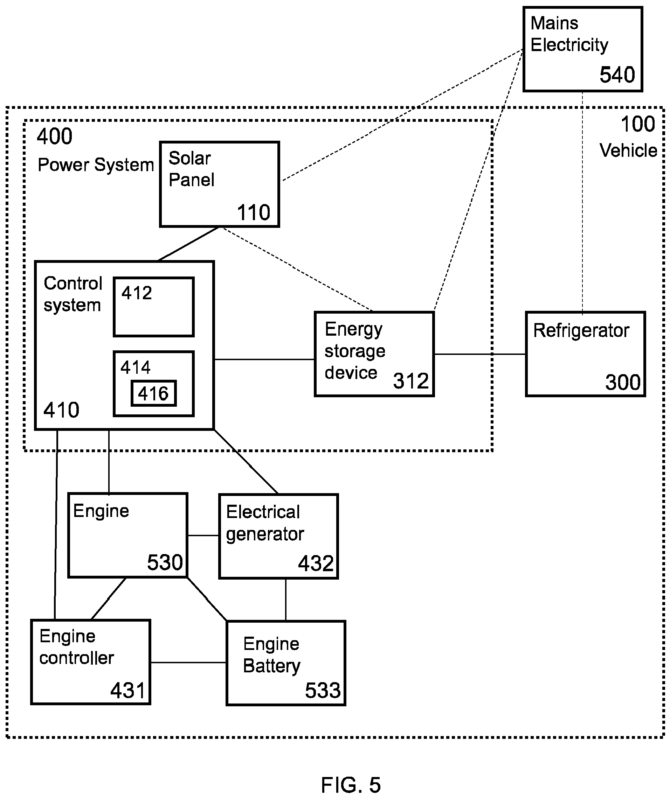

FIG. 5 illustrates a schematic block diagram of an example refrigerated vehicle 100 according to embodiments of the invention. The vehicle 100 comprises all of the elements as described with regard to FIG. 4 and also comprises an engine 530 and an engine battery 533.

In some embodiments, the engine 530 is an internal combustion engine. In other embodiments, the engine 530 may be any form of engine 530; for example, the engine 530 may be hybrid with both an internal combustion engine and an electric motor, or may be an electric motor. The engine 530 may use any suitable fuel. The term "fuel" is intended to encompass the chemical energy stored in liquid fuels such as such as petrol or diesel, the chemical energy stored in batteries, and the mechanical energy stored in flywheels.

The engine battery 533 is electrically connected to the electrical generator 432. The electrical generator 432 supplies electrical energy to the engine battery 533 and may supply electrical energy to power electrical devices of the vehicle 100 such as the lights. The engine controller 431 may monitor the charge level of the engine battery 533.

The engine battery 533 is for supplying electrical energy to power electrical devices of the vehicle 100, and for supplying electrical energy to start the engine 530. The engine battery 533 may be an SLI (starting, lighting, and ignition) battery which is not for traction of the vehicle 100 (i.e. it does not supply energy that is used for causing the vehicle 100 to move), or the engine battery 533 may be traction battery which is for supplying energy that is used for causing the vehicle 100 to move. The engine battery 533 is a rechargeable electric battery and may be of any suitable type such as lithium-ion, lead-acid, nickel-cadmium, nickel-zinc or nickel metal hydride. The engine battery 533 may be any suitable voltage such as 12V or 24V.

The power system 400 may comprise a housing, where the control system 410 and energy storage device 312 are housed within the housing but the solar panel 110 is not. The engine 530, engine controller 431, electrical generator 432, engine battery 533 and refrigerator 300 are external to the housing.

FIG. 5 also illustrates a mains electricity supply 540 which may be electrically connected to the refrigerator 300, the energy storage device 312 and/or the solar panel 110 when the vehicle 100 is parked. The mains electricity supply 540 may be used to supply electrical energy to the refrigerator 300 and/or energy storage device 312, charging the energy storage device 312. The solar panel 110 may supply electrical energy to the electrical grid where it can be used to power other devices.

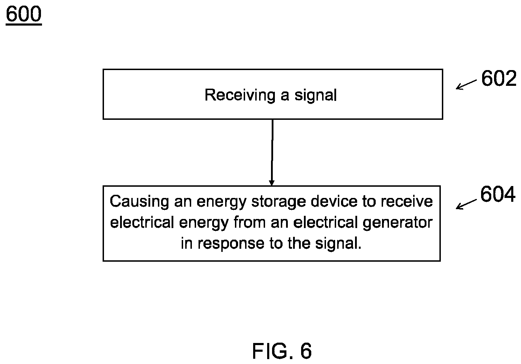

FIG. 6 illustrates a flow chart of an example method according to embodiments of the invention and is performed by the control system 410 that forms part of the power system 400. The processor 412, by executing the storing computer program instructions 416 stored in the memory 414, causes the control system 410 to perform the method.

In block 602 in FIG. 6, the control system 410 receives a signal. The signal is received from the engine controller 431. The signal is indicative of a current energy consumption rate of the vehicle 100.

The energy consumption rate is a fuel consumption rate. The consumption rate may be a measure of the energy used for the vehicle 100 to travel a specific distance (i.e. the fuel economy). A particular parameter may be indicated by the signal, such as litres per 100 kilometres (L/100 km) or gallons per mile (gpm). A value of miles per gallon (mpg) inherently provides a value of gpm. The signal that is indicative of a current energy consumption rate of the vehicle 100 may comprise information indicative of the accelerator pedal position. That is, the information may include an actuator angle of the accelerator pedal of the vehicle 100 which indicates the extent to which the accelerator pedal has been actuated by the driver of the vehicle 100. The signal that is indicative of a current energy consumption rate of the vehicle 100 may be indicative that the engine 530 is in an overrun condition. In the overrun condition, the vehicle 100 is travelling with no throttle and the engine 530 acts as a brake.

The engine controller 431 may periodically send the signal to the control system 410; for example, every few milliseconds, such as every 5 milliseconds. Each time the signal is received by the control system 410, it may compare the current energy consumption rate indicated by the signal to a threshold and so determine if the energy consumption rate of the vehicle 100 is above or below the threshold.

In block 604 in FIG. 6, the control system 410 causes the energy storage device 312 to receive electrical energy from an electrical generator 432 in response to the signal. In response to reception of the signal that is indicative of a current energy consumption rate of the vehicle 100 being below a threshold, the control system 410 causes the at least one energy storage device 312 to receive electrical energy from the electrical generator 432 of the vehicle 100.

The threshold of the current energy consumption rate may be a threshold measure of the energy used for the vehicle 100 to travel a specific distance. For example, for a 40 tonne vehicle 100 the threshold may be 1/13 gallons per mile, and for a 3.5 tonne vehicle 100 the threshold may be 1/40 gallons per mile. The threshold may be a threshold acceleration pedal position/angle. The energy consumption rate being below the threshold may indicate that the vehicle 100 is braking or travelling downhill. For example, the threshold measure of the energy used for the vehicle 100 to travel a specific distance may be a value which can only be reached when the vehicle 100 is braking or going downhill. The threshold may be indicative that the engine 530 of the vehicle 100 is in an overrun condition.

In causing the at least one energy storage device 312 to receive electrical energy from the electrical generator 432 an electrical resistance is added to the electrical generator 432. This increased electrical resistance produces an increased mechanical resistance within the electrical generator 432. Due to the mechanical connection between the electrical generator 432 and the engine 530 this produces a drag on the engine 530 and thus a braking force on the vehicle 100. The system, therefore, transfers some of the kinetic energy of the vehicle 100 to the energy storage device 312 in order to power the refrigerator 300, and so acts as a kinetic energy recovery system performing regenerative braking.

When the vehicle 100 is braking, the current energy consumption rate of the vehicle 100 rises above the threshold. When the vehicle 100 is travelling downhill, the current energy consumption rate of the vehicle 100 also rises above the threshold. In response, some of the kinetic energy of the vehicle 100 is transferred to the energy storage device 312, where it may be stored as kinetic energy, chemical energy or otherwise.

When the vehicle 100 is braking this loss of kinetic energy provides an additional braking force and slows the vehicle 100. This means that energy that would otherwise be wasted can be used to power the refrigerator 300.

When the vehicle 100 is travelling downhill this loss of kinetic energy also provides a braking force and slows the vehicle 100. This braking force may be desirable, if the vehicle 100 would otherwise be travelling too quickly, in which case energy that would otherwise be wasted can be used to power the refrigerator 300. Alternatively, this braking force may be undesirable and the speed of the vehicle 100 may be reduced when a user would not wish it. However, as the vehicle 100 is travelling downhill the effect of the loss of kinetic energy is minimised.

A technical effect of the invention is that kinetic energy of a vehicle 100 may be transferred to an energy storage device 312 to power a refrigerator 300 only when the energy would otherwise be wasted or when the reduction in kinetic energy would have a minimal effect on the vehicle's 100 speed.

In some examples, the control system 410 receives a signal indicative that the current energy consumption rate of the vehicle 100 is below a further threshold. In response the control system 410 may cause the at least one energy storage device 312 to cease receiving electrical energy from the electrical generator 432 of the vehicle 100. The further threshold may be the same as the threshold. Alternatively, the further threshold may be lower than the threshold. The further threshold being lower than the threshold adds a hysteresis to the system and has the advantage that unwanted rapid switching between the states of energy transfer and ceasing energy transfer is avoided. The threshold may be considered a trigger threshold and the further threshold may be considered a release threshold.

In some examples, the threshold and the further threshold are fixed thresholds. In other examples, the threshold and/or the further threshold are variable thresholds.

For example, the control system 410 can receive a signal indicative of an energy level, such as a charge level, of the energy storage device 312. In response the control system 410 can change the threshold or the further threshold based on the energy level of the energy storage device 312. This may involve the control system 410 decreasing the threshold in response to the energy level of the energy storage device 312 being below a threshold. This enables more energy to be transferred to the energy storage device 312 when it is running low and so prevents the energy storage device 312 from running out of energy and being unable to power the refrigerator 300.

The control system 410 may cause the energy storage 312 device to cease receiving electrical energy from the electrical generator 432 when the energy storage device 312 is full. The control system 410 may also cause the energy storage device 312 to cease receiving electrical energy from the solar panel 110 when the energy storage device 312 is full.

The control system 410 can receive a signal indicative of a charge level of the engine battery 533. In response to reception of the signal indicative of a charge level of an engine battery 533, the control system 410 can change the threshold or the further threshold based on the charge level of the engine battery 533 of the vehicle 100. This may involve the control system 410 increasing the threshold in response to the charge level of the engine battery 533 of the vehicle 100 being below a threshold.

FIG. 4 illustrates an example of a control system/controller 410. Implementation of a controller 410 may be as controller circuitry. The controller 410 may be implemented in hardware alone, have certain aspects in software including firmware alone or can be a combination of hardware and software (including firmware).

As illustrated in FIG. 4 the controller 410 may be implemented using instructions 416 that enable hardware functionality, for example, by using executable instructions 416 of a computer program in a general-purpose or special-purpose processor 412 that may be stored on a computer readable storage medium (disk, memory 414 etc.) to be executed by such a processor 412.

The processor 412 is configured to read from and write to the memory 414. The processor 412 may also comprise an output interface via which data and/or commands are output by the processor 412 and an input interface via which data and/or commands are input to the processor 412.

The memory 414 stores a computer program comprising computer program instructions 416 (computer program code) that controls the operation of the apparatus 400 when loaded into the processor 412. The computer program instructions 416, of the computer program, provide the logic and routines that enables the apparatus to perform the methods illustrated in FIG. 6. The processor 412 by reading the memory 414 is able to load and execute the computer program.

The control system 410 therefore comprises:
at least one processor 412; and
at least one memory 414 including computer program code
the at least one memory 414 and the computer program code configured to, with the at least one processor 412, cause the control system 410 at least to perform:
   in response to reception of a signal that is indicative of a current energy consumption rate of the refrigerated vehicle 100 being below a threshold, cause at least one energy storage device 312 to receive electrical energy from an electrical generator 432 of the refrigerated vehicle 100.

The computer program may arrive at the apparatus via any suitable delivery mechanism. The delivery mechanism may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program. The delivery mechanism may be a signal configured to reliably transfer the computer program. The apparatus may propagate or transmit the computer program as a computer data signal.

The computer program instructions 416 may be comprised in a computer program, a non-transitory computer readable medium, a computer program product, a machine readable medium. In some but not necessarily all examples, the computer program instructions 416 may be distributed over more than one computer program.

Although the memory 414 is illustrated as a single component/circuitry it may be implemented as one or more separate components/circuitry some or all of which may be integrated/removable and/or may provide permanent/semi-permanent/ dynamic/cached storage.

Although the processor 412 is illustrated as a single component/circuitry it may be implemented as one or more separate components/circuitry some or all of which may be integrated/removable. The processor 412 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The blocks illustrated in the FIG. 6 may represent steps in a method and/or sections of code in the computer program. The illustration of a particular order to the blocks does not necessarily imply that there is a required or preferred order for the blocks and the order and arrangement of the block may be varied.

Each of the elements in the vehicle 100, the power system 400 and the control system 410 may be operationally coupled and any number or combination of intervening elements can exist (including no intervening elements).

Where a structural feature has been described, it may be replaced by means for performing one or more of the functions of the structural feature whether that function or those functions are explicitly or implicitly described.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims. For example, in some examples, the vehicle 100 is not a refrigerated vehicle 100 and does not comprise a refrigerator 300. In these examples the energy storage device 312 is for supplying a different electrical device such as a crane, a cement mixer, lighting, air conditioning, a forklift, a tail-lift, a moving floor, a fan, or medical equipment. In some examples the vehicle 100 is an ambulance. The electrical device may be a retrofitted device which is not present on initial manufacture of the vehicle 100, and may be an accessory/ancillary of the vehicle 100.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasize an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavouring in the foregoing specification to draw attention to those features believed to be of importance it should be understood that the applicant may seek protection via the claims in respect of any patentable feature or combination of features hereinbefore referred to and/or shown in the drawings whether or not emphasis has been placed thereon.

## Claims

1. A power system for supplying electrical energy to a refrigerator of a refrigerated vehicle, the power system comprising:
at least one energy storage device for electrical connection to an electrical generator of the refrigerated vehicle and for supplying electrical energy to the refrigerator;
at least one solar panel for providing electrical energy to the at least one energy storage device;
at least one processor; and
memory storing computer program instructions that, when executed by the at least one processor, cause the power system to:
in response to reception of a signal that is indicative of a current energy consumption rate of the refrigerated vehicle being below a threshold, cause the at least one energy storage device to receive electrical energy from the electrical generator of the refrigerated vehicle.

2. The power system of claim 1, wherein the computer program instructions further cause the power system to:
cause the at least one energy storage device to cease receiving electrical energy from the electrical generator of the refrigerated vehicle in response to the signal being indicative that the current energy consumption rate of the refrigerated vehicle is below a further threshold, wherein optionally the further threshold is the same as the threshold or the further threshold is lower than the threshold.

3. The power system of claims 1 or 2, wherein the computer program instructions further cause the power system to:
in response to reception of a signal indicative of an energy level of the at least one energy storage device, change the threshold based on the energy level of the at least one energy storage device,
wherein optionally the computer program instructions further cause the power system to:
decrease the threshold in response to the energy level of the at least one energy storage device being below a threshold.

4. The power system of claim 3, wherein the computer program instructions further cause the power system to:
cause the at least one energy storage device to cease receiving electrical energy from the electrical generator of the refrigerated vehicle when the at least one energy storage device is full.

5. The power system of any of the preceding claims, wherein the computer program instructions further cause the power system to:
in response to reception of a signal indicative of a charge level of an engine battery of the refrigerated vehicle, change the threshold based on the charge level of the engine battery of the refrigerated vehicle,
wherein optionally the computer program instructions further cause the power system to:
increase the threshold in response to the charge level of the engine battery of the refrigerated vehicle being below a threshold.

6. The power system of any of the preceding claims, wherein the at least one solar panel comprises a prismatic surface comprising a plurality of prisms and/or wherein the signal is received from an engine controller which is coupled to an engine of the refrigerated vehicle.

7. The power system of any of the preceding claims, wherein the energy consumption rate is a fuel consumption rate and/or wherein the energy consumption rate is a measure of the energy used for the refrigerated vehicle to travel a specific distance.

8. The power system of any of the preceding claims, wherein the signal that is indicative of a current energy consumption rate of the refrigerated vehicle comprises information indicative of the accelerator pedal position.

9. The power system of any of the preceding claims, wherein the signal that is indicative of a current energy consumption rate of the refrigerated vehicle is indicative that an engine of the refrigerated vehicle is in an overrun condition, and wherein the computer program instructions further cause the power system to:
cause the at least one energy storage device to receive electrical energy from the electrical generator of the refrigerated vehicle in response to the signal being indicative that the engine of the refrigerated vehicle is in an overrun condition.

10. The power system of any of the preceding claims, wherein the electrical generator is an alternator or an electric motor/generator, and the electrical generator is coupled to an engine of the refrigerated vehicle.

11. The power system of any of the preceding claims, wherein the energy consumption rate being below the threshold indicates that the refrigerated vehicle is braking or travelling downhill.

12. The power system of any of the preceding claims, further comprising the refrigerator, wherein optionally the refrigerator has a capacity of 1000 litres or more.

13. A refrigerated vehicle comprising the power system of any of the preceding claims, wherein optionally the at least one solar panel is positioned on a roof of the refrigerated vehicle, and/or the refrigerated vehicle is a land-based vehicle.

14. A control system for supplying electrical energy to a refrigerator of a refrigerated vehicle, the control system comprising:
at least one processor; and
memory storing computer program instructions that, when executed by the at least one processor, cause the control system to:
in response to reception of a signal that is indicative of a current energy consumption rate of the refrigerated vehicle being below a threshold, cause at least one energy storage device to receive electrical energy from an electrical generator of the refrigerated vehicle.

15. A method for supplying electrical energy to a refrigerator of a refrigerated vehicle, the method comprising:
in response to reception of a signal that is indicative of a current energy consumption rate of the refrigerated vehicle being below a threshold, cause at least one energy storage device to receive electrical energy from an electrical generator of the refrigerated vehicle.
